Europäisches Patentamt

European Patent Office

Office européen des brevets

(19)

(11) **EP 1 251 248 A1**

(12) **EUROPÄISCHE PATENTANMELDUNG**

(43) Veröffentlichungstag:
**23.10.2002 Patentblatt 2002/43**

(51) Int Cl.⁷: **F01N 3/023**, F01N 3/035,
F01N 3/022

(21) Anmeldenummer: **01109571.8**

(22) Anmeldetag: **18.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **OMG AG & Co. KG**
**63457 Hanau (DE)**

(72) Erfinder:
- **PFEIFER, Marcus DR.**
  **DE 42719 Solingen (DE)**
- **KRIEG, Harald**
  **DE 60435 Frankfurt (DE)**
- **van SETTEN, Barry Dr.**
  **DE 63517 Rodenbach (DE)**
- **STAAB, Roger**
  **DE 63579 Freigericht (DE)**

- **GIESHOFF, Jürgen Dr.**
  **DE 63599 Biebergemünd (DE)**
- **LOX, Egbert**
  **DE 63403 Hanau (DE)**
- **KREUZER, Thomas Dr.**
  **DE 61184 Karben (DE)**

(74) Vertreter: **Herrmann, Reinhard**
**OMG AG**
**FI-PAT**
**Postfach 1351**
**63403 Hanau (DE)**

Bemerkungen:
The application is published incomplete as filed (Article 93 (2) EPC).

(54) **Verfahren und Vorrichtung zur Entfernung von Russpartikeln aus dem Abgas eines Dieselmotors**

(57) Die Erfindung betrifft ein Verfahren zur Entfernung von Rußpartikeln aus dem Abgas eines Dieselmotors sowie eine Vorrichtung zur Durchführung des Verfahrens. Die Vorrichtung weist einen Tiefenfilter (1) mit einem Katalysator auf. Mittels des Katalysators wird im Abgas enthaltenes stickstoffmonoxid zu Stickstoffdioxid oxidiert. Mittels des so erzeugten Stickstoffdioxids werden aus dem Abgasstrom am Tiefenfilter (1) abgeschiedene Rußpartikel innerhalb eines katalytischen Zyklus kontinuierlich oxidiert. Die Vorrichtung weist eine Ruß-sperre (3) zur Ablagerung von Rest-Rußpartikel am Ausgang des Tiefenfilters (1) auf.

**Fig. 1**

EP 1 251 248 A1

**Beschreibung**

Die Erfindung betrifft ein Verfahren und eine Vorrichtung zur Entfernung von Rußpartikeln aus dem Abgas eines Dieselmotors.

Insbesondere im Hinblick auf die für das Jahr 2005 geplante Festlegung von Abgasgrenzwerten in der EU zielen Neuentwicklungen im Bereich von Dieselfahrzeugen auf die gleichzeitige Verringerung von Stickoxid- und Rußemissionen von Dieselmotoren.

Eine wesentliche Schwierigkeit hierbei besteht darin, daß durch konstruktive Maßnahmen an Dieselmotoren zur Senkung einer der genannten Schadstoffkomponenten gleichzeitig die andere Schadstoffkomponente verstärkt auftritt.

Wird beispielsweise die Rußemission durch eine Erhöhung der Verbrennungstemperaturen im Dieselmotor gesenkt, wird dafür eine verstärkte Bildung von Stickoxiden erhalten. Werden dagegen Stickstoffemissionen beispielsweise durch eine Abgasrückführung vermindert, wird die Emission von Ruß erhöht.

Die konstruktiven Maßnahmen zur Optimierung von Dieselmotoren bilden daher einen Kompromiss zwischen der Optimierung der Rußemissionen einerseits und der Optimierung der Stickoxidemissionen andererseits.

Dabei werden bei modernen Dieselmotoren Stickoxidemissionen erhalten, welche den geplanten Grenzwerten bereits sehr nahe kommen, wogegen Rußemissionen noch verstärkt auftreten.

Zur Beseitigung derartiger Rußemissionen ist daher eine Abgasnachbehandlung notwendig. Hierzu werden derzeit Filter, insbesondere Wandflussfilter eingesetzt, um in dem Abgas enthaltene Rußpartikel auszufiltern.

Mit derartigen Filtern werden Abscheidegrade von über 95 % erzielt, so daß eine effiziente Verminderung der Rußemissionen im Abgas des Dieselmotors gewährleistet ist.

Problematisch hierbei ist jedoch, daß derartige Filter durch die kontinuierliche Ablagerung von Rußpartikeln verstopfen. Daher müssen die Filter durch Verbrennen der Rußpartikel regeneriert werden.

Prinzipiell kann die Regeneration der Filter durch thermische Verfahren erfolgen. Dabei werden die Rußpartikel mit Hilfe des im Abgas vorhandenen Sauerstoffs verbrannt. Nachteilig hierbei ist jedoch, daß bei derartigen thermischen Verbrennungen Temperaturen im Bereich von 550 °C bis 600 °C benötigt werden.

Derartige Temperaturen werden im Abgas des Dieselmotors jedoch nur dann erhalten, wenn der Dieselmotor im Volllastbetrieb betrieben wird. Eine Regeneration des Filters im Normalbetrieb ist nur dann möglich, wenn das Filter mittels zusätzlicher Heizelemente aufgeheizt wird. Dies bedingt jedoch einen erhöhten Energiebedarf und damit auch einen erhöhten Kraftstoffverbrauch.

Anstelle thermischer Verfahren werden auch katalytische Verfahren zur Regeneration von Filtern eingesetzt.

Ein derartiges Verfahren ist aus der EP 0 341 832 B1 bekannt. Bei diesem Verfahren wird das Abgas eines Dieselmotors in einem ersten Verfahrensschritt ohne Filterung über einen Katalysator geleitet. Mittels des Katalysators, der vorzugsweise ein auf einem Wabenmonolithen angeordnetes Platingruppenmetall umfasst, wird im Abgas vorhandenes Stickstoffmonoxid in Stickstoffdioxid umgewandelt. Dem Katalysator ist ein Filter zur Filterung von Rußpartikeln aus dem Abgas nachgeordnet. Zur Regeneration des Filters wird das im Katalysator erzeugte Stickstoffdioxid verwendet, um auf dem Filter abgelagerte Rußpartikel bei einer Temperatur von weniger als 400 °C zu verbrennen.

Problematisch hierbei ist jedoch, daß zu einer vollständigen Regeneration des Filters ausreichende Mengen an Stickstoffdioxid notwendig sind.

Moderne Dieselmotoren, insbesondere Dieselmotoren für Kleinlast- und Personenkraftwagen, welche vorzugsweise Abgasrückführungssysteme aufweisen, sind hinsichtlich der Emission von Stickoxiden optimiert, so daß die im Abgas vorhandenen Mengen an Stickstoffdioxid für eine vollständige Regeneration des Filters nicht ausreichen. Beispiele hierfür sind ein 3 l DI/ TCI Dieselmotor mit Abgasrückführung sowie ein 2,2 l CRDI-Dieselmotor. Typischerweise wird für derartige Dieselmotoren nur eine Verbrennung von 50 % bis 70 % der Rußpartikel erhalten.

Aus der DE 199 23 781 A1 ist ein weiteres Verfahren zur Entfernung von Rußpartikeln aus dem Abgas eines Dieselmotors bekannt.

Gemäß diesem Verfahren werden in mehreren aufeinander folgenden Verfahrensstufen jeweils folgende Verfahrensschritte durchgeführt:

- Oxidation des im Abgas enthaltenen Stickstoffmonoxids zu Stickstoffdioxid.

- Abtrennen von Rußpartikeln aus dem Abgasstrom des Dieselmotors.

- Oxidieren der Rußpartikel unter Verwendung des erzeugten Stickstoffdioxids.

Entsprechend der Anzahl der Verfahrensstufen weist die Vorrichtung zur Durchführung dieses Verfahrens eine Anzahl von hintereinander angeordneten Behandlungseinheiten auf, durch welche der Abgasstrom geführt wird.

Dem in der DE 199 23 781 A1 beschriebenen Verfahren liegt die Überlegung zugrunde, daß aufgrund des geringen Gehalts an Stickoxiden im Abgas moderner Dieselmotoren eine vollständige Rußoxidation mittels der Stickoxide nicht möglich ist.

Um diesem Problem zu begegnen weisen die Behandlungseinheiten zur Durchführung der einzelnen Verfahrensschritte vorzugsweise jeweils einen Katalysator und ein diesem nachgeordnetes Filter auf.

In einem Filter erfolgt jeweils die Ablagerung von Rußpartikeln aus dem Abgas. Zur Regeneration des Filters wird mittels des vorgeordneten Katalysators Stickstoffmonoxid zu Stickstoffdioxid umgewandelt. Dieses Stickstoffdioxid wird dem Filter zur Oxidation der Rußpartikel zugeführt.

Die Behandlungseinheiten sind dabei derart beschaffen, daß in dem Filter nur eine bestimmte Teilmenge der Rußpartikel aus dem Abgas abgeschieden wird, die mittels des im zugeordneten Katalysator erzeugten Stickstoffdioxids zur Regeneration des Filters verbrannt werden kann.

In einer zweckmäßigen Ausgestaltung können die Behandlungseinheiten so beschaffen sein, daß das jeweilige Filter und der zugeordnete Katalysator ein integrales Bauteil bilden. Insbesondere kann ein derartiges Bauteil von einem Filter, insbesondere einem Tiefenfilter gebildet sein, welches mit dem jeweiligen Katalysator beschichtet ist.

Nachteilig bei diesem Verfahren ist, daß in den einzelnen Behandlungseinheiten sowohl eine unzureichende Filterung der Rußpartikel als auch eine unzureichende Erzeugung von Stickstoffdioxid zur Regeneration des Filters erfolgt, so daß eine Mehrfachanordnung mehrerer hintereinander angeordneter Behandlungseinheiten notwendig wird.

Dabei ist in der DE 199 23 781 A1 angegeben, daß die Anzahl der gewählten Verfahrensstufen von den jeweiligen Betriebsbedingungen des Dieselmotors abhängt. Die vorzugsweise angegebene Anzahl von 2 bis 4 Verfahrensstufen stellt dabei einen Kompromiss dar, der für die jeweiligen Betriebsbedingungen als ausreichend empfunden wird. Daraus folgt, daß für eine vollständige Entfernung von Rußpartikeln und eine gleichzeitige vollständige Filterregeneration eine beträchtliche Anzahl von Behandlungseinheiten notwendig ist. Der konstruktive Aufwand zur Entfernung der Rußpartikel aus dem Abgasstrom ist daher unerwünscht hoch.

Der Erfindung liegt die Aufgabe zugrunde ein Verfahren und eine Vorrichtung für eine effiziente und vollständige Beseitigung von Rußpartikeln aus dem Abgas eines Dieselmotors bereitzustellen.

Zur Lösung dieser Aufgabe sind die Merkmale der Ansprüche 1 und 5 vorgesehen. Vorteilhafte Ausführungsformen und zweckmäßige Weiterbildungen der Erfindung sind in den Unteransprüchen beschrieben.

Die Vorrichtung zur Durchführung des erfindungsgemäßen Verfahrens weist ein Tiefenfilter mit einem Katalysator auf. Mittels des Katalysators wird im Abgas enthaltenes Stickstoffmonoxid zu Stickstoffdioxid oxidiert. Mittels des so erzeugten Stickstoffdioxids werden aus dem Abgasstrom am Tiefenfilter abgeschiedene Rußpartikel innerhalb eines katalytischen Zyklus kontinuierlich oxidiert. Die Vorrichtung weist weiterhin eine Rußsperre zur Ablagerung von Rest-Rußpartikel am Ausgang des Tiefenfilters auf.

Der Grundgedanke der Erfindung besteht darin, zur Beseitigung der Rußpartikel ein Tiefenfilter mit einem Katalysator zu verwenden, so daß in einem katalytischen Zyklus eine kontinuierliche Regeneration des Tiefenfilters erhalten wird.

In diesem katalytischen Zyklus wird an einem ersten Katalysatorzentrum aus dem Abgas stammendes Stickstoffmonoxid in Stickstoffdioxid umgewandelt. Dieses Stickstoffdioxid dient zur Oxidation von auf dem Tiefenfilter abgeschiedenen Roßpartikeln, wobei das Stickstoffdioxid wieder zu Stickstoffmonoxid zurückreduziert wird. Dieses Stickstoffmonoxid wird in Strömungsrichtung des Abgases am nächsten Katalysatorzentrum wieder zu Stickstoffdioxid oxidiert, worauf dieses Stickstoffdioxid zur Oxidation weiterer am Tiefenfilter abgelagerter Rußpartikel verwendet wird.

Das Tiefenfilter und der Katalysator, der vorzugsweise als katalytische Beschichtung auf das Tiefenfilter aufgebracht ist, sind dabei derart dimensioniert, daß durch die Regenerationszyklen kein Verstopfen des Katalysators mit Rußpartikeln auftritt, so daß bei Durchströmen des Abgases im Tiefenfilter eine Vielzahl derartiger Katalysezyklen abläuft.

Dabei kann die Anzahl der ablaufenden Katalysezyklen insbesondere auch durch die Prozesstemperaturen vorgegeben werden. Die Temperatur im Bereich des Tiefenfilters liegt dabei unter 450 °C und besonders vorteilhaft etwa bei 350 °C.

Durch die kombinierte Filterwirkung und die kontinuierlichen Regenerationsprozesse erfolgt in dem Tiefenfilter bereits die Beseitigung des Großteils der im Abgas enthaltenen Rußpartikel.

Die am Ausgang des Tiefenfilters anstehenden Rest-Roßpartikel werden in einer dem Tiefenfilter nachgeordneten Rußsperre gesammelt, welche beispielsweise von einem Wandflussfilter oder einer Metallsinterplatte gebildet ist.

Dabei werden, vorzugsweise mit Hilfe des im Tiefenfilter erzeugten Stickstoffdioxids, auch die in der Rußsperre abgelagerten Rest-Rußpartikel kontinuierlich regeneriert.

Die Erfindung wird im nachstehenden anhand der Zeichnungen erläutert. Es zeigen:

Figur 1: Schematische Darstellung eines ersten Ausführungsbeispiels der erfindungsgemäßen Vorrichtung zur Entfernung von Rußpartikeln aus dem Abgas eines Dieselmotors.

Figur 2: Schematische Darstellung eines zweiten Ausführungsbeispiels der erfindungsgemäßen Vorrichtung zur Entfernung von Rußpartikeln aus dem Abgas eines Dieselmotors.

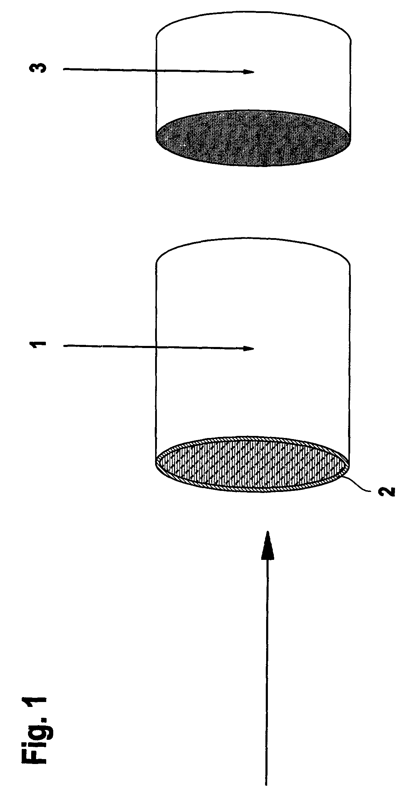

Figur 1 zeigt ein erstes Ausführungsbeispiel der erfindungsgemäßen Vorrichtung zur Entfernung von Rußpartikeln aus dem Abgas eines Dieselmotors.

Die Vorrichtung weist ein Tiefenfilter 1 mit einem Katalysator auf, wobei der Katalysator als katalytische Beschichtung 2 auf den Tiefenfilter 1 aufgebracht ist. Prinzipiell kann der Katalysator auch das Filtermaterial des Tiefenfilters 1 selbst bilden.

Die Vorrichtung weist weiterhin eine Rußsperre 3 auf. Die Rußsperre 3 ist in dem mit einem Pfeil gekennzeichneten Abgasstrom des Dieselmotors dem Tiefenfilter 1 nachgeordnet. Im vorliegenden Ausführungsbeispiel besteht die Rußsperre 3 aus einem Wandflussfilter.

Das Tiefenfilter 1 besteht aus keramischen Fasern, keramischen Schäumen, Drahtgeflechten oder dergleichen. Generell weist das Tiefenfilter 1 ein grobporiges Filtermaterial auf, in welchem Rußpartikel aus dem Abgasstrom hauptsächlich durch Trägheitseffekte und/oder Diffusionseffekte abgelagert werden.

Die katalytische Beschichtung 2 ist zweckmäßigerweise über die gesamte Länge des Tiefenfilters 1 aufgebracht. Im vorliegenden Fall ist die Mantelfläche des Tiefenfilters 1 mit der katalytischen Beschichtung 2 versehen.

Zudem können prinzipiell auch an der Eingangs- und Ausgangsseite des Tiefenfilters 1 zumindest lokal katalytische Beschichtungsstrukturen vorgesehen sein.

Der Querschnitt des Tiefenfilters 1 ist an den Querschnitt des nachgeordneten Wandflussfilters angepasst, so daß der gesamte Abgasstrom am Ausgang des Tiefenfilters 1 dem Wandflussfilter zugeführt ist. Prinzipiell kann der Wandflussfilter auch auf die Ausgangsseite des Tiefenfilters 1 aufgesetzt sein.

Die katalytische Beschichtung 2 weist wenigstens ein Edelmetall auf, wobei im vorliegenden Fall die katalytische Beschichtung 2 Platin enthält. Weiterhin enthält die katalytische Beschichtung 2 wenigstens ein oxidisches Trägermaterial, im vorliegenden Fall Aluminiumoxid, welches zur Fixierung des Edelmetalls dient.

Mittels des Tiefenfilters 1 und der katalytischen Beschichtung 2 erfolgt eine kontinuierliche Entfernung von Rußpartikeln aus dem Abgasstrom, wobei erfindungsgemäß in einem katalytischen Zyklus das Tiefenfilter 1 in einem kontinuierlichen Prozess regeneriert wird. Die Prozesstemperatur liegt dabei unterhalb von 450 °C und besonders bevorzugt bei 350 °C.

Das im Abgasstrom des Dieselmotors enthaltene Stickstoffdioxid wird an einem ersten Platinzentrum zu Stickstoffdioxid aufoxidiert. Dieses Stickstoffdioxid wird zum Verbrennen von Rußpartikeln verwendet, wobei die Oxidation der Rußpartikel gemäß folgender Gleichung erfolgt:

$$C + 2NO_2 \rightarrow CO_2 + NO$$

Das dabei entstehende Stickstoffinonoxid wird am nächsten Platinzentrum wieder in Stickstoffdioxid umgewandelt, welches nachfolgend zur Oxidation weiterer Rußpartikel verwendet wird.

Zweckmäßigerweise kann der Katalysator der katalytischen Beschichtung 2 eine aktive Substanz aufweisen, welche die Oxidation der Rußpartikel unterstützt. Als derartige Substanzen sind insbesondere Ceroxid und/oder Zirkonoxid und/oder Terbiumoxid und/oder Präseodymoxid verwendbar.

Durch den katalytischen Zyklus wird genügend Stickstoffdioxid bereitgestellt, welches zu einer vollständigen Oxidation der abgelagerten Rußpartikel und damit zu einer Regeneration des Tiefenfilters 1 ausreicht.

Durch die zusätzliche Filterwirkung des Tiefenfilters 1 ist zudem gewährleistet, daß der Großteil der Rußpartikel aus dem Abgasstrom ausgefiltert wird. Die verbleibenden Rest-Rußpartikel werden in der Rußsperre 3 abgelagert. Dabei erfolgt auch in der Rußsperre 3 eine kontinuierliche Oxidation der abgelagerten Rußpartikel, wobei vorzugsweise hierzu im Tiefenfilter 1 generiertes, überschüssiges Stickstoffdioxid verwendet wird.

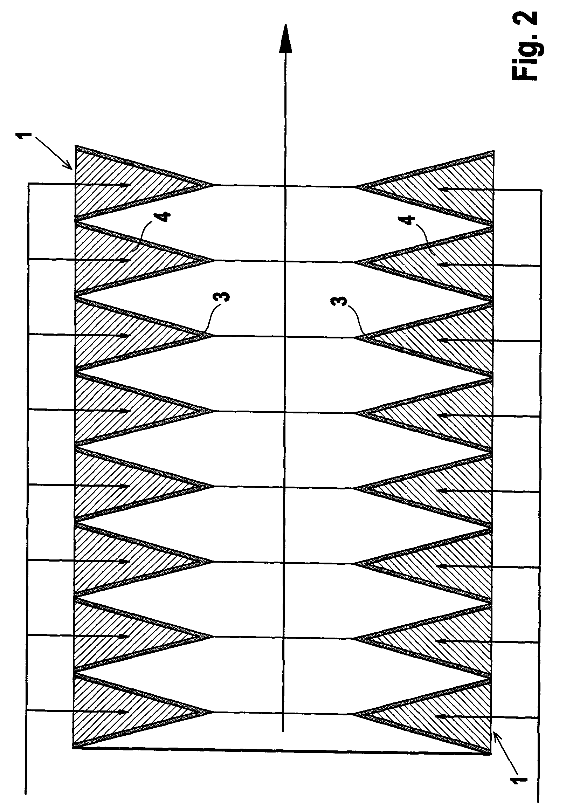

Figur 2 zeigt ein weiteres Ausführungsbeispiel der Vorrichtung zur Entfernung von Rußpartikeln aus dem Abgas eines Dieselmotors.

Die Vorrichtung und insbesondere das Tiefenfilter 1 weisen in diesem Fall im Wesentlichen die Form eines Hohlzylinders auf. Die Strömungsrichtung des Abgasstromes ist in Figur 2 wiederum mit Pfeilen gekennzeichnet. Die äußere Mantelfläche des Hohlzylinders bildet dabei die Anströmseite des Tiefenfilters 1, über welche das Abgas dem Tiefenfilter 1 zugeführt wird. Nach Durchströmen des Tiefenfilters 1 und der diesem nachgeordneten Rußsperre 3 wird der Abgasstrom über den in Längsrichtung des Hohlzylinders verlaufenden zentralen Abströmkanal ausgeleitet.

Das Filtermaterial des Tiefenfilters 1 entspricht vorzugsweise dem Filtermaterial gemäß dem Ausführungsbeispiel nach Figur 1. Auch das Katalysatormaterial der am Tiefenfilter 1 angebrachten katalytischen Beschichtung 2 entspricht dem Ausführungsbeispiel gemäß Figur 1.

Das Tiefenfilter 1 gemäß Figur 2 besteht aus einer Mehrfachanordnung von identisch ausgebildeten Filterelementen 4. Die Filterelemente 4 sind im Wesentlichen ringförmig ausgebildet und laufen in Umfangsrichtung des Hohlzylinders um. Dabei schließen die Filterelemente 4 in Längsrichtung des Hohlzylinders dicht aneinander an, so daß sich die Rückseiten der Filterelemente 4 zu einer geschlossenen Fläche ergänzen, welche die Mantelfläche des Hohlzylinders und damit die Anströmseite des Tiefenfilters 1 bildet.

Die einzelnen Filterelemente 4 enthalten den Katalysator, welcher über das gesamte Volumen eines jeden Filterelements 4 verteilt ist.

Die Filterelemente 4 weisen jeweils einen dreieckigen Querschnitt auf, welcher über die gesamte Länge des Filterelements 4 konstant ist. Auf die in den Abströmkanal ragenden, in spitzem Winkel aufeinander zulaufenden Seitenflächen jedes Filterelements 4 ist als Rußsperre 3 eine Metallsinterplatte aufgebracht.

Das Abgas wird über die Anströmseite des Tiefenfilters 1 den einzelnen Filterelementen 4 zugeführt. Der Katalysator in den Filterelementen 4 dient analog zu dem Ausführungsbeispiel gemäß Figur 1 zur Oxidation des im Abgas enthaltenen Stickstoffdioxids. Damit wird wiederum ein katalytischer Zyklus zur kontinuierlichen Entfernung der Rußpartikel aus dem Abgasstrom erhalten.

Die Ablagerung der Rest-Rußpartikel erfolgt wiederum in der Rußsperre 3. Besonders vorteilhaft hierbei ist, daß der Katalysator in den Filterelementen 4 unmittelbar an die Rußsperre 3 angrenzt. Dabei wird durch die flächige Ausbildung der Rußsperre 3 eine große Kontaktfläche mit dem Katalysator erhalten. Dadurch ist gewährleistet, daß in dem Katalysator generiertes Stickstoffdioxid auch in der Rußsperre 3 in ausreichender Menge zur Oxidation der Rußpartikel zur Verfügung steht.

**Patentansprüche**

1. Verfahren zur Entfernung von Rußpartikeln aus dem Abgas eines Dieselmotors umfassend folgende Verfahrensschritte:

   Kontinuierliche Oxidation von im Abgas enthaltenem Stickstoffmonoxid zu Stickstoffdioxid und Oxidieren von aus dem Abgasstrom abgeschiedenen Rußpartikeln unter Verwendung des erzeugten Stickstoffdioxids innerhalb eines katalytischen Zyklus sowie nachfolgende Ablagerung von Rest-Rußpartikeln in einer Rußsperre (3).

2. Verfahren nach Anspruch 1,
   **dadurch gekennzeichnet,**
   **daß** die Oxidation der Rußpartikel bei Temperaturen unterhalb von 450 °C erfolgt.

3. Verfahren nach einem der Ansprüche 1 oder 2,
   **dadurch gekennzeichnet,**
   **daß** in der Rußsperre (3) eine Oxidation der Rest-Rußpartikel erfolgt.

4. Verfahren nach Anspruch 3,
   **dadurch gekennzeichnet,**
   **daß** innerhalb des katalytischen Zyklus erzeugtes Stickstoffdioxid zur Oxidation der in der Rußsperre (3) abgelagerten Rest-Rußpartikel verwendet wird.

5. Vorrichtung zur Durchführung des Verfahrens nach einem der Ansprüche 1 - 4, mit einem einen Katalysator aufweisenden Tiefenfilter (1), wobei mittels des Katalysators im Abgas enthaltenes Stickstoffmonoxid zu Stickstoffdioxid oxidiert wird, und wobei mittels des so erzeugten Stickstoffdioxids aus dem Abgasstrom am Tiefenfilter (1) abgeschiedene Rußpartikel innerhalb eines katalytischen Zyklus kontinuierlich oxidiert werden, und mit einer Rußsperre (3) zur Ablagerung von Rest-Rußpartikeln am Ausgang des Tiefenfilters (1).

6. Vorrichtung nach Anspruch 5,
   **dadurch gekennzeichnet,**
   **daß** der Katalysator als katalytische Beschichtung (2) am Tiefenfilter (1) ausgebildet ist.

7. Vorrichtung nach einem der Ansprüche 5 oder 6,
   **dadurch gekennzeichnet,**
   **daß** das Filtermaterial des Tiefenfilters (1) von keramischen Fasern, keramischen Schäumen oder Drahtgeflechten gebildet ist.

8. Vorrichtung nach einem der Ansprüche 6 oder 7,
   **dadurch gekennzeichnet,**
   **daß** die katalytische Beschichtung (2) wenigstens ein Edelmetall enthält.

9. Vorrichtung nach Anspruch 8,
   **dadurch gekennzeichnet,**
   **daß** die katalytische Beschichtung (2) Platin enthält.

10. Vorrichtung nach einem der Ansprüche 8 oder 9,
    **dadurch gekennzeichnet,**
    **daß** die katalytische Beschichtung (2) wenigstens ein oxidisches Trägermaterial zur Fixierung des Edelmetalls enthält.

11. Vorrichtung nach Anspruch 10,
    **dadurch gekennzeichnet,**
    **daß** das oxidische Trägermaterial von Aluminiumoxid gebildet ist.

12. Vorrichtung nach einem der Ansprüche 5 - 11,
    **dadurch gekennzeichnet,**
    **daß** der Katalysator eine katalytische aktive Substanz aufweist, welche die Oxidation von Rußpartikeln unterstützt.

13. Vorrichtung nach Anspruch 12,
    **dadurch gekennzeichnet,**
    **daß** die katalytisch aktive Substanz von Ceroxid und/oder Zirkonoxid und/oder Terbiumoxid und/oder Präseodymoxid gebildet ist.

14. Vorrichtung nach einem der Ansprüche 5 -13,
    **dadurch gekennzeichnet,**
    **daß** die Rußsperre (3) von einem dem Tiefenfilter (1) nachgeordneten Wandflussfilter gebildet ist.

15. Vorrichtung nach einem der Ansprüche 5 - 13,
    **dadurch gekennzeichnet,**
    **daß** die Rußsperre (3) von einem dem Tiefenfilter (1) nachgeordneten Metallsinter gebildet ist.

**16.** Vorrichtung nach einem der Ansprüche 5 - 14,
**dadurch gekennzeichnet,**
**daß** die Rußsperre (3) von einer Metallsinterplatte gebildet ist.

**17.** Vorrichtung nach Anspruch 16,
**dadurch gekennzeichnet,**
**daß** das Tiefenfilter (1) aus einer Mehrfachanordnung von parallel vom Abgas durchströmten, den Katalysator enthaltenden Filterelementen (4) besteht, auf deren Abströmseiten Metallsinterplatten angeordnet sind.

**18.** Vorrichtung nach Anspruch 17,
**dadurch gekennzeichnet,**
**daß** das gesamte Filtermaterial eines Filterelements (4) mit dem Katalysator beschichtet ist.

**19.** Vorrichtung nach Anspruch 17 oder 18,
**dadurch gekennzeichnet,**
**daß** das Tiefenfilter (1) im Wesentlichen hohlzylindrisch ausgebildet ist, wobei die Anströmseiten der in Längsrichtung des Tiefenfilters (1) hintereinander angeordneten Filterelemente (4) die äußere Mantelfläche des Tiefenfilters (1) bilden.

**20.** Vorrichtung nach einem der Ansprüche 17 - 19,
**dadurch gekennzeichnet,**
**daß** die Filterelemente (4) identisch ausgebildet sind.

**21.** Vorrichtung nach einem der Ansprüche 19 oder 20,
**dadurch gekennzeichnet,**
**daß** die Filterelemente (4) in Umfangsrichtung des Tiefenfilters (1) umlaufend angeordnet sind und an ihren Anströmseiten dicht aneinander anliegen.

**22.** Vorrichtung nach Anspruch 21,
**dadurch gekennzeichnet,**
**daß** die Filterelemente (4) einen dreieckigen Querschnitt aufweisen.

Fig. 1

Fig. 2

**Europäisches Patentamt**

# EUROPÄISCHER RECHERCHENBERICHT

Nummer der Anmeldung

EP 01 10 9571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | DE 199 23 781 A (DEGUSSA) 7. Dezember 2000 (2000-12-07) * Seite 3, Zeile 44 – Zeile 50 * | 1,3-14 | F01N3/023 F01N3/035 F01N3/022 |
| Y | * Seite 4, Zeile 19 – Seite 5, Zeile 25; Abbildungen * | 2 | |
| Y | ANONYMOUS: "CRT Filter" DIESELNET TECHNOLOGY GUIDE, XX, XX, 15. März 2001 (2001-03-15), Seiten 1-5, XP002162969 www.dieselnet.com * Seite 1, Absatz 1; Abbildung 1 * | 2 | |
| X | PATENT ABSTRACTS OF JAPAN vol. 1997, no. 07, 31. Juli 1997 (1997-07-31) & JP 09 079024 A (TOYOTA MOTOR CORP), 25. März 1997 (1997-03-25) * Zusammenfassung * | 1,3-5 | |
| D,A | EP 0 341 832 A (JOHNSON MATTHEY INC) 15. November 1989 (1989-11-15) | | **RECHERCHIERTE SACHGEBIETE (Int.Cl.7)** F01N |

Der vorliegende Recherchenbericht wurde für alle Patentansprüche erstellt

| Recherchenort | Abschlußdatum der Recherche | Prüfer |
|---|---|---|
| DEN HAAG | 25. September 2001 | Sideris, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 01 10 9571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-09-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 19923781 | A | | 07-12-2000 | DE | 19923781 | A1 | 07-12-2000 |
| | | | | EP | 1055805 | A1 | 29-11-2000 |
| | | | | JP | 2001003728 | A | 09-01-2001 |
| JP 09079024 | A | | 25-03-1997 | KEINE | | | |
| EP 0341832 | A | | 15-11-1989 | US | 4902487 | A | 20-02-1990 |
| | | | | AT | 132940 | T | 15-01-1996 |
| | | | | DE | 68925382 | D1 | 22-02-1996 |
| | | | | DE | 68925382 | T2 | 15-05-1996 |
| | | | | DK | 233389 | A | 14-11-1989 |
| | | | | EP | 0341832 | A2 | 15-11-1989 |
| | | | | ES | 2081301 | T3 | 01-03-1996 |
| | | | | GR | 3018800 | T3 | 30-04-1996 |
| | | | | IE | 71167 | B1 | 29-01-1997 |
| | | | | JP | 1318715 | A | 25-12-1989 |
| | | | | JP | 3012249 | B2 | 21-02-2000 |
| | | | | NO | 891936 | A ,B, | 14-11-1989 |

EPO FORM P0461

Für nähere Einzelheiten zu diesem Anhang : siehe Amtsblatt des Europäischen Patentamts, Nr.12/82